# EUROPEAN PATENT APPLICATION

(11) **EP 0 975 116 A2**
(43) Date of publication of application: **26.01.2000**
(21) Application number: 99202248.3
(22) Date of filing: 08.07.1999
(51) Int. Cl.: H04J 3/16

(54) **Statistical multiplexing**

(30) Priority: 18.07.1998 GB 9815615
(71) Applicant: NDS LIMITED, West Drayton, Middlesex UB7 ODQ (GB)
(72) Inventor: Budge, Michael, Winchester, Hampshire SO22 6RU (GB)
(74) Representative: Anderson, Angela Mary

(57) **Abstract**

The present invention relates to multiplexing a plurality of digital signals through channels which share a predetermined bitrate.

One of the channels has a pre-allocated share of bitrate and has a known maximum bitrate. A target quality is set for the pre-allocated channel and the actual quality is repeatedly adjusted towards the target quality. Any difference between the actual bitrate of the pre-allocated channel and the pre-allocated share of bitrate is identified and redistributed to the remaining channels.

By this means the advantages of a fixed bitrate encoder are achieved whilst allowing the unused bandwidth of the final bitrate encoder to be used in the remaining channels, one of which may be a data service channel.

## Description

The present invention relates to multiplexing a plurality of digital signals through channels which share a predetermined total bitrate.

In a known method of multiplexing television channels for transmission to a receiver, the video signal channels are multiplexed by means of a statistical multiplexer in which a share of the bit rate capacity of the multiplexer is allocated to each of the video signal channels according to picture quality. Some pictures require a much higher bitrate than others to achieve an acceptable picture quality and a multiplex control computer (MCC) is used to perform the allocation of bitrate between the channels according to the criticality of the picture material to be transmitted.

Certain encoders have been regarded as unsuitable for inclusion in a statistical multiplexer group because they have been allocated a fixed bitrate. There are a number of reasons for allocating a fixed bitrate to an encoder. Firstly, the encoder may be used for a channel which is going to be remultiplexed and may require a known maximum bitrate. Secondly, the encoder may require a predictable minimum quality. Thirdly, there may be too few encoders to form a satisfactory statistical multiplexer group. Fourthly, there may not be sufficient statistical variance on the material going through the multiplexers to justify forming a statistical multiplexer group. In any of the above scenarios, the broadcaster may opt to allocate a fixed bitrate to an encoder.

A problem with fixed bitrate encoding of video signals is that because video material has a very variable criticality profile, the broadcaster is forced to allocate a high britrate to ensure that the decoded result looks acceptable for the majority of video sequences. This inevitably means that for much of the time the fixed bitrate encoder has excess bitrate allocated to it.

It is the aim of the present invention to provide an improvement in multiplexing a plurality of digital signals transmitted through a plurality of channels, the channels including one which has a pre-allocated share of the total channel bitrate.

According to the present invention there is provided a method of transmitting a plurality of digital signals through a plurality of channels, the channels sharing a predetermined total bitrate and including a channel have a pre-allocated share of bitrate, the method comprising: encoding each digital signal; multiplexing the encoded signals; setting a target quality for the pre-allocated channel; repeatedly adjusting the actual quality of the pre-allocated channel towards the target quality; identifying any difference between the actual bitrate of the pre-allocated channel and the pre-allocated share of bitrate; and, redistributing any such difference to the remaining channel or channels.

Further according to the present invention there is provided apparatus for transmitting a plurality of digital signals through a plurality of channels, the channels sharing a predetermined total bitrate and including a channel having a pre-allocated share of bitrate, the apparatus comprising,
encoding apparatus to encode each digital signal,
a multiplexer to multiplex the encoded signals,
target control means for setting a target quality for the pre-allocated channel and for repeatedly adjusting the actual quality of the pre-allocated channel towards the target quality,
a comparator to identify any difference between the actual bitrate of the pre-allocated channel and the pre-allocated share of bitrate, and
control means to re-distribute any such bitrate difference to the remaining channel or channels.

During those periods when the pre-allocated channel would be exceeding its allocated quality target, the bitrate of the pre-allocated channel is reduced.

The bitrate capacity which thereby becomes available is redistributed for use around other channels where it can be more profitably employed.

The invention will now be described, by way of example, with reference to the accompanying drawings in which:

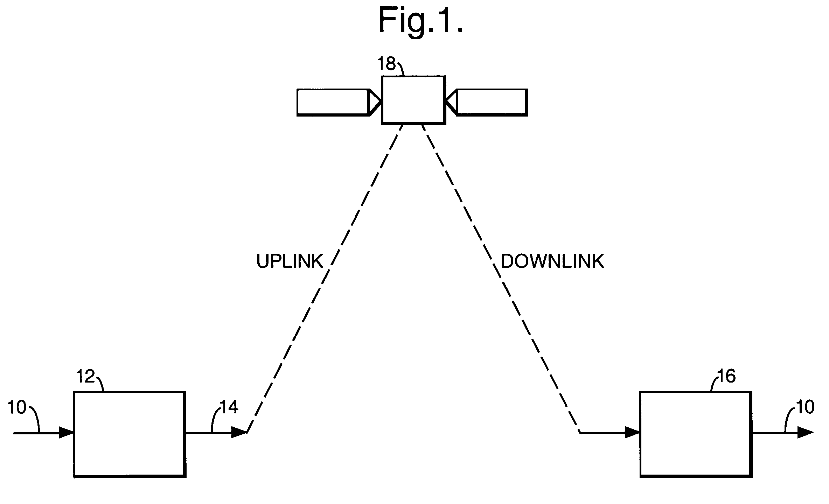

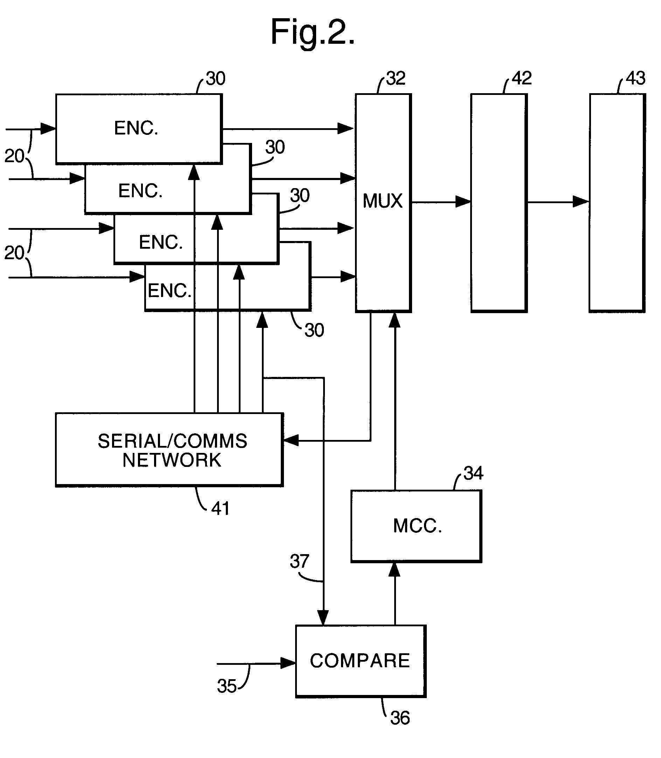

Figure 1 is a block diagram of a transmitting and receiving system embodying the present invention; and, Figure 2 shows multiplex apparatus incorporated into the system of Figure 1.

Figure 1 shows a transmission and receiving system in which a multiplexed television and data signal 10 is input to a transmitter 12. The detail of the transmission channel for the signal 10 will be described later. The signal undergoes signal processing as it passes through the transmission channel and a transmission signal 14 is generated. The transmission signal is then transmitted to a receiver 16 where it is converted back into the component television and data signals. The television and data signals may either be displayed for viewing or re-transmitted to another receiver, if necessary. In the Figure 1 system the transmission from the transmitter end to the receiver end is via a satellite 18. Clearly other means of transmission could be used in place of satellite transmission.

Referring now to Figure 2, each transmission channel of the transmitter 12 includes a digital encoder 30. The encoders have a combined total bitrate (or group bitrate) allocated to them and a multiplexer 32 is provided to multiplex the digital signals from the encoders. The multiplexer is a statistical multiplexer that apportions the group bitrate to the individual encoders in such a way as to meet the individual requirements of each encoder at that point in time. The inputs to the decoders 30 are the input digital signals 20. The digital signals 20 include television signals and a least one low priority digital data service. The data service provides data which is of sufficiently low importance that it can be slotted in when the television signals do not need the bandwidth occupied by the data service. Such a service may be a software download service or an Internet service provision.

The television signal channels each have a linear target picture quality which may be determined by the user (or broadcaster) and is the measure of the picture quality the user expects the encoder in that channel to achieve. Preferences may be attached to individual television channels by allocating a higher than average target for picture quality in the statistical multiplexer group. At least one of the television signal channels has a pre-allocated, guaranteed minimum quality of service and a guaranteed maximum bitrate above which it is not allowed more bitrate.

Each video encoder 30 has a bitrate that is variable to adjust the linear picture quality in the channel thereof and each video encoder has means to signal to the multiplexer an indication of the linear picture quality in its channel. The multiplexer is operative to pool the video encoders and the low priority data service interactively. The multiplexer receives the indication of picture quality from each video channel and is connected through a control network 41 to vary the bitrates of the encoders so as to distribute the total allocated bitrate between the encoders. When allocating the new bitrates to the encoders the multiplexer must ensure that the bitrates will not infringe any decoder buffer models and does not exceed any bitrate limits specified by the user. Thus, the statistical multiplexer system is capable of responding to variations in the criticality of source material and adjusts the operation of one or more encoders within the statistical multiplexer group, to optimise operation of the system. The distribution of the total bitrate is such as to tend to equalise the percentage difference between the actual and target linear picture quality for all of the video encoders and to provide bitrate capacity for the low priority data service.

In the statistical multiplexer system the multiplexer is master and must communicate with the encoders slaved to it, as often as possible if variations in picture difficulty are to be fully exploited. It is felt that to exploit the potential of this invention, bitrate requirements should be reassessed for each encoder as often as possible. The multiplexer may communicate with the encoders connected to it via a dedicated fast communications network that connects the multiplexer to each of its encoders.

It is the task of the multiplexer to divide the total available bitrate, between the encoders in a statistical multiplexer group, in such a way as to achieve the target quality and data urgency of each encoder. Then to continually assess the performance of each encoder and adjust the bitrates to keep the actual quality and data urgency reported to the encoder as close to the target as possible. Other secondary tasks of the multiplexer are:
a) to keep the system controller or MCC 34 informed on how realistic the target figures are for the total available bitrate, ie, how well the encoders are achieving target figures;
b) to ensure that maximum and minimum boundaries are not exceeded for each encoder, or that bitrate changes allocated to an encoder do not cause decoder buffer over/under flow.

The unit of exchange between the system control computer MCC 34 and video encoder and multiplexer must be some measure of picture quality, rather than because different video channels allocated the same linear quality target figure may have different bitrate requirements.

The channel which has a guaranteed pre-allocated share of the multiplexer bitrate capacity is polled by the multiplexer every video frame. In each poll the multiplexer requests from the corresponding encoder 30 a value indicating the actual quality that is being achieved by the pre-allocated channel encoder. The multiplexer then compares the target quality of the pre-allocated channel against the actual quality to calculate how to change the bitrate in the pre-allocated channel so as to minimize the difference between the target quality and the actual quality. If the new bitrate is calculated to exceed the maximum guaranteed bitrate, the new bitrate is clipped to the maximum. If the new bitrate is less than the guaranteed maximum, the difference is calculated and signalled to the system controller 34. The difference represents the bandwidth available for redistribution between the remaining channels including the low priority data service. In one possible embodiment, the low priority data service has bandwidth provided exclusively from the difference between the actual bitrate and maximum bitrate in the pre-allocated channel.

In Figure 2, the maximum guaranteed bitrate is signalled on an input 35 to a compare unit 36. An input representing the actual bitrate of the pre-allocated channel is provided as a second input 37 to the compare unit 36. The output from the compare unit 36 is applied to the system controller 34 representing the difference, if any, between the inputs 35 and 37.

Once the task of the statistical multiplexer system has been completed the output signal produced by the multiplexer may be modulated through a modulator 42 to produce a modulated signal that is transmitted to a remote receiver 43. The multiplexer may communicate with the encoders in order to control their operation by means of the communication network 41.

Further details of the allocation of bitrate between video encoders in dependence upon a measure of linear quality target figures are to be found our corresponding patent application number: EP96305955.5 published under EP0759667 (Our Ref: 94-01).

It will be apparent that while only one pre-allocated signal channel has been described, there may be two or more such channels included in the statistical multiplexer group. It will also be apparent that the data to be conveyed by the low priority data channel may be encoded so as to be in packets of equal length or of variable length.

What has been described is a statistical multiplexing system in which a channel has a pre-allocated share of bitrate. The actual quality of the pre-allocated channel is repeatedly adjusted towards a target quality and any difference between the actual bitrate of the pre-allocated channel and the pre-allocated share of bitrate is identified by the compare unit 36. The MCC 34 varies the share of the bitrate capacity of the multiplexer 32 according to identified difference, if any.

It will be apparent that the pre-allocated share of bitrate may be up to a guaranteed maximum which may be fixed or may be altered from time to time in dependence upon the needs of the broadcaster. The redistributed bitrate may be shared between all the other channels or may be preferentially allocated to one or more of the other channels.

## Claims

1. A method of transmitting a plurality of digital signals through a plurality of channels, the channels sharing a predetermined total bitrate and including a channel having a pre-allocated share of bitrate, the method comprising;
encoding each digital signal
multiplexing the encoded signals,
setting a target quality for the pre-allocated channel, repeatedly adjusting the actual quality of the pre-allocated channel towards the target quality,
identifying any difference between the actual bitrate of the pre-allocated channel and the pre-allocated share of bitrate, and
re-distributing any such bitrate difference to the remaining channel or channels.

2. A method according to claim 1, further comprising redistributing the difference between the actual bitrate of the pre-allocated channel and the pre-allocated share of bitrate to a plurality of remaining channels of which at least one is a video signal channel and at least one is a data service channel.

3. A method according to claim 2 wherein the redistributing step comprises redistributing the bitrate difference so that the date service channel has bandwidth provided exclusively from the said bitrate difference.

4. A method according to claim 1, 2 or 3, further comprising preselling the pre-allocated channel to a minimum quality of service.

5. Apparatus for transmitting a plurality of digital signals through a plurality of channels, the channels sharing a predetermined total bitrate and including a channel having a pre-allocated share of bitrate, the apparatus comprising,
encoding apparatus to encode each digital signal,
a multiplexer to multiplex the encoded signals,
target control means for setting a target quality for the pre-allocated channel and for repeatedly adjusting the actual quality of the pre-allocated channel towards the target quality,
a comparator to identify any difference between the actual bitrate of the pre-allocated channel and the pre-allocated share of bitrate, and
control means to re-distribute any such bitrate difference to the remaining channel or channels.

6. Apparatus as claimed in claim 5, wherein the control means is operable to redistribute the said bitrate difference to a plurality of remaining channels of which at least one is a video signal channel and at least one is a data service channel.

7. Apparatus as claimed in claim 6, wherein the control means is operable to redistribute the said bitrate difference so that the data service channel has bandwidth provided exclusively from the said bitrate difference.

8. Apparatus as claimed in claim 5, 6 or 7, wherein the pre-allocated channel has a preset maximum bitrate and a preset minimum quality of service.

9. A method of transmitting a plurality of digital signals through a plurality of channels, the method being substantially as hereinbefore described with reference to the accompanying drawings.

10. Apparatus for transmitting a plurality of digital signals through a plurality of channels, the apparatus being substantially as hereinbefore described with reference to the accompanying drawings.
